# EUROPÄISCHE PATENTSCHRIFT

(11) **EP 0 421 131 B1**
(45) Veröffentlichungstag und Bekanntmachung des Hinweises auf die Patenterteilung: **23.03.1994**
(21) Anmeldenummer: 90116922.7
(22) Anmeldetag: 04.09.1990
(51) Int. Cl.: G01D 5/245, G01D 5/249

(54) **Signalumwandlung für Inkrementalgeber**
Signal transformation for an incremental sensor
Transformation d'un signal pour un capteur incrémental

(30) Priorität: 30.09.1989 DE 3932800
(43) Veröffentlichungstag der Anmeldung: 10.04.1991
(73) Patentinhaber: HENGSTLER GMBH, D-78554 Aldingen (DE)
(72) Erfinder: Bücher, Johann, D-7209 Aldingen (DE)
(74) Vertreter: Riebling, Peter, Dr.-Ing.

(56) Entgegenhaltungen:
- EP-A- 0 212 578
- EP-A- 0 332 244
- ELECTRONICS, vol. 54, no. 12, 16. Juni 1981, New York, US, Seite 167, Bill McClelland: "Fewer parts resolve shaft encoder data"

## Beschreibung

Die Erfindung betrifft ein Signalumwandlungsverfahren für Inkrementalgeber mit dem Merkmalen des Oberbegriffs von Patentanspruch 1, sowie eine schaltung zur Ausführung.

Ein derartiges Verfahren ist in der Zeitschrift "Electronics" vom 16.06.81, Seite 167, bekannt. Dort ist ein Phasendiskriminator vorgesehen, dem Hardwarezähler nachgeschaltet sind.

Ein Problem bei diesem bekannten Verfahren besteht jedoch darin, daß die Frequenz am Eingang des Phasendiskriminators, insbesondere die Eingangsfrequenz der Gebersignale gesteigert, bzw. die Grenzfrequenz der Zähler im Bereich des Phasendiskriminators überschritten werden, wobei diese Grenzfrequenz oft unterhalb von 1 MHz liegt.

Bei der bekannten Signalumwandlung wird ein Hardwarezähler auf dem Positioniermodul bzw. den Inkrementalgeber eingesetzt, wobei der Hardwarezähler bis maximal 1 MHz zählen kann. Bei einer Vierfach-Auswertung der beiden um 90 ° phasenverschobenen Inkrementalgebersignale ergibt sich eine maximale Eingangsfrequenz von 250 KHz. Hier besteht der Wunsch für eine erhöhte Genauigkeit der Eingangsfrequenz z. B. auf das doppelte auf 500 KHz zu steigern. Hierbei soll jedoch bei gleichzeitiger Eingangsfrequenzsteigerung keine Minderung der Auswertung bzw. der Genauigkeit auftreten.

Bei bekannten Lösungen zur Erfassung der Impulse von Inkrementalgebern wird daher zur Position bzw. zur Winkelbestimmung ein Phasendiskriminator eingesetzt, der vorzugsweise mit einer Vierfach-Auswertung betrieben wird um die beste Genauigkeit zu erhalten. Die erzeugten Zählimpulse müssen anschließend in einem Zähler erfaßt werden. In der Regel wird mit der Grenzfrequenz dieses Zählers die maximale Eingangsfrequenz bestimmt, die sich demnach nicht beliebig steigern läßt.

Würde bei einer bekannten Anordnung mit einer höheren Eingangsfrequenz der Gebersignale gearbeitet werden, so müßte, um unterhalb der Grenzfrequenz der nachgeschalteten Zähler zu bleiben, ein Verlust der Auflösung und damit der Genauigkeit in Kauf genommen werden.

Im Rahmen der Grenzfrequenz der nachgeschalteten Zähler wird bei bekannten Zählschaltungen normalerweise ein Signal über einen phasendiskriminator ausgewertet, wobei aus einer Periode vier Zählimpulse z. B. mit 1 MHz generiert werden können. Bei einer Steigerung der Eingangsfrequenz der Gebersignale für eine wünschenswert höhere Genauigkeit würde infolgedessen die Grenzfrequenz der nachgeschalteten Zähler im Bereich des Phasendiskriminators überschritten werden.

Die EP 0 332 244 Al beschreibt einen Encoder, dessen Signalaufbereitung für das Signal NO durch eine Exclusiv-Verknüpfung erfolgt. Bei derartigen Absolutgebern wird diese Art der Verknüpfung eingesetzt, um eine Erhöhung der Auflösung zu erreichen.

Aufgabe der Erfindung ist es daher, ein Verfahren mit den Merkmalen des Oberbegriffes von Patentanspruch 1 so weiter zu bilden, daß die Eingangsfrequenz von einem zum anderen Kanal ohne besonderen Aufwand erhöht werden kann, ohne dabei die Anzahl der Zählimpulse für eine erhöhte Genauigkeit zu vermindern, sowie eine geeignete schaltung zu gestalten.

Zur Lösung der Aufgabe dienen die Merkmale des kennzeichnenden Teils des Patentanspruchs 1 bzw. des Patentanspruches 3.

Das Ziel der Erfindung liegt darin, die Eingangsfrequenz von Kanal A und Kanal B zu erhöhen, und zwar beispielsweise um den Faktor 4, ohne die Anzahl der Zählimpulse, die bei einer Vierfach-Auswertung aus der Geberfrequenz generiert werden, zu vermindern.

Der Kern der Erfindung liegt darin, daß man die Signalfolge von Kanal A und Kanal B in Perioden unterteilt. Überraschenderweise befindet sich dann in der Periodeninformation, d.h. in dem Signal welches sich über die Periode in Verbindung mit Kanal A und Kanal B ändert, eine absolute Information für die Winkelposition, für den Weg oder dergleichen, was mit einem Decoder erfaßt werden kann.

Es reicht demnach jetzt aus, die Anzahl der Perioden zu erfassen und man kann auf diese z. B. vierfache Zählfrequenz, die früher nötig war, verzichten. Mit der erfindungsgemäßen Eingangsschaltung braucht man nur noch die Periodenzahl zu erfassen und mit dem absoluten Decodersignal in Verbindung zu bringen, um eine absolute Positionsaussage zu haben. Demnach kann die Eingangsfrequenz von Kanal A/B erhöht werden, ohne an die Grenze der Hardwarezähler oder der Zähler im Phasendiskriminator zu gelangen, weil in Verbindung mit dem Decoder die z. B. vierfache Zählfrequenz bei der Auswertung wegfällt.

Die Erfindung liegt also darin, daß man eine Vierfach-Auswertung und entsprechend aufwendige Zähler vermeidet und man stattdessen einen einfachen Decoder verwendet, der eine absolute Positionsbestimmung gibt und von da ausgehend braucht man nur noch mit einem relativ einfachen Zähler die Periodenzahl zu bestimmen. Man hat damit erreicht, daß man die untersten zwei Stellen eines Zählers nicht mehr explizit zählen muß.

Geht man z. B. im Bereich des Phasendiskriminators oder der Hardwarezähler von einem konkreten Zähler aus, der eine Zählfrequenz von maximal 1 MHz hat, kann man jetzt die Zählfrequenz auf dem Kanal A und B um das Vierfache erhöhen und überschreitet trotzdem nicht die Zählfrequenz des Hardwarezählers. Dies geschieht dadurch, daß man das Zählwort insgesamt nun mit dem Decoder zusammensetzt, wo man zusätzlich eine absolute Information erhält, so daß die Zählfrequenz der Hardwarezähler nicht überschritten wird.

Geht man davon aus, daß der Hardwarezähler selbst ab der Bitstelle 2² bis zur Bitstelle 2¹⁷ zählen muß so handelt es sich hierbei um einen 16bit-Zähler, der jetzt über den erfindungsgemäßen Decoder erweitert wird. Durch diese Erweiterung, in Verbindung mit der vom Decoder bewirkten Absolutbestimmung, wurde jetzt im Bereich der unteren Bitzahlen eine Erweiterung von zwei zusätzlichen Bit erreicht, so daß man jetzt insgesamt zwei Bit mehr zählen kann.

Es handelt sich also hierbei um einen erweiterten oder frisierten Hardwarezähler, der nun erfindungsgemäß aus einem Phasendiskriminator und einem Decoder besteht. Diese Anordnung kann im weiteren noch um einen Softwarezähler, der nachgeschaltet wird, ergänzt werden, was eine erweiterte Auswertung und Erhöhung der Meßgrenzen dieser gesamten Zähleranordnung ergibt.

In vorteilhafter Ausgestaltung wird der Decoder als Exclusive-NOR Gatter geschaltet und die Periodeninformation von Kanal A und Kanal B wird direkt in ein binäres Signal umgesetzt.

Im weiteren ist der Decoder als Gray-Binärcodewandler ausgebildet.

In vorteilhafter Anordnung wird erreicht, daß über den Decoder in Abhängigkeit vom Kurvenverlauf der Perioden der Gebersignale der genaue Nullpunkt des Positionsmeßgerätes festgelegt werden kann (Siehe Tabelle).

Die erfindungsgemäße Decoderschaltung wird demnach zur Bestimmung der Bitstufen 2⁰ und 2¹ eingesetzt, weil gerade dadurch die Reduktion der Frequenz um den Faktor vier erreicht wird und insoweit die Zähleranordnung unterhalb der Grenzfrequenz der Hardwarezähler bleibt.

Die üblicherweise von einem Zähler inkremental zu erfassenden Bit 2⁰ und 2¹ werden demnach bei der Erfindung durch eine absolute Positionserfassung ersetzt. Man zählt also die Position 2⁰ und 2¹ selbst nicht mehr, sondern erfaßt sie absolut. Man kann also die Frequenz auf den Kanälen A und B steigern, weil in Verbindung mit dem Decoder eine absolute Zählung 0,1,2,3 bzw. 1,2,3,4 erfolgt, wo bei Überschreitung der Zahl vier ein Übertrag auf den nachgeschalteten Hardwarezähler erfolgt. In Verbindung mit der absoluten Erfassung über den Decoder kann daher ein Teil der Zählung von dem Decoder erfaßt werden, so daß infolgedessen der Zählbereich der Hardwarezähler bei sonst gleicher Genauigkeit und erhöhter Eingangsfrequenz der Kanäle A und B unterhalb der Grenzfrequenz bleibt.

Im folgenden wird die Erfindung anhand von lediglich einen Ausführungsweg darstellende Zeichnungen näher erläutert.

Es zeigen:
- Figur 1:: eine aus dem Stand der Technik bekannte Signaldarstellung, wo die Zählfrequenz in Abhängigkeit von der Auswertung dargestellt ist,
- Figur 1a:: das Erzeugen einer Weginformation durch Zählimpulse im Hardwarezähler bei einer bekannten Anordnung,
- Figur 2:: die Erzeugung von absoluten Weg- oder Winkelpositionen aus in Perioden aufgeteilten Gebersignalen a und b mittels der erfindungsgemäßen Decoderschaltung,
- Figur 2a:: die Erzeugung einer Weginformation mittels des Decoders in Verbindung mit einer Gray-Binärumwandlung aus Gebersignalen erhöhter Frequenz durch Zählimpulse einer Einfach-Auswertung,
- Figur 3:: ein praktisches Ausführungsbeispiel für die erfindungsgemäße Zählanordnung mit einem Decoder in schematischer Darstellung.

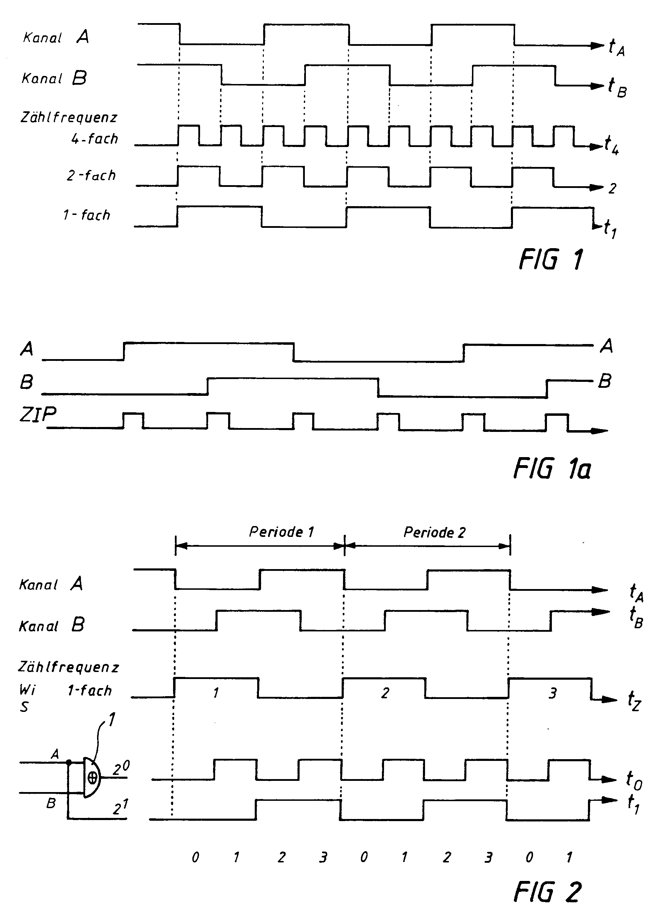

In Figur 1 ist eine an sich bekannte Lösung zur Position bzw. Winkelbestimmung mit einem Inkrementalgeber in Verbindung mit einem Phasendiskriminator dargestellt. Der Phasendiskriminator wird vorzugsweise mit einer Vierfach-Auswertung betrieben entsprechend der vierfachen Zählfrequenz nach Figur 1, um die beste Genauigkeit zu haben. Die erzeugten Zählimpulse werden anschließend in einem Zähler erfaßt, wobei in der Regel mit diesem Zähler mit dessen Grenzfrequenz die maximale Eingangsfrequenz der Gebersignale bestimmt wird.

Aus Figur 1 ist ersichtlich, daß z. B. bei einer vierfachen Zählfrequenz von 1 MHz hier das Signal t₄ die Gebersignale t_{A} und t_{B} der Geber A und B nicht beliebig in der Frequenz gesteigert werden können, weil sonst die Grenzfrequenz von 1 MHz der Zählfrequenz t_{A} überschritten wird.

In Figur 1 ist im weiteren mit den Signalen t₁ und t₂ eine Einfach- bzw. Zweifach-Auswertung dargestellt, wobei aber das Signal t₄ mit der vierfachen Zählfrequenz die höchste Genauigkeit ergibt.

Aus Figur 1 der bekannten Anordnung ist weiterhin ersichtlich, daß die Zählfrequenz t₁, t₂ und t₄ direkt von der Auswertung abhängig ist. Bei reduzierter Auswertung kann die Eingangsfrequenz der Gebersignale t_{A},t_{B} um den Faktor zwei bzw. vier gesteigert werden. Allerdings nimmt bei der bekannten Anordnung die Auflösung bzw. die Genauigkeit des Meßsystems entsprechend der reduzierten Auswertung ab.

Bei der bekannten Anordnung wird demnach das Ziel der Eingangsfrequenzsteigerung, um die Grenzfrequenz der nachgeschalteten Zähler nicht zu überschreiten, nur durch den Verlust der Auflösung und damit der Genauigkeit erreicht.

In Figur 1a ist dargestellt wie bei einer bekannten Anordnung nach Figur 1 ein Zählimpuls ZIP aus den Gebersignalen A und B gewonnen wird, wobei auch hier ersichtlich ist, daß bei einer Steigerung der Eingangsfrequenz der Signale A und B die Grenzfrequenz des Zählimpulses ZIP überschritten werden könnte.

Aus Figur 1a ist weiter ersichtlich, daß z. B. die Weginformation 2° bis 2¹⁵ durch die Zählimpulse ZIP in einem Hardwarezähler erzeugt werden.

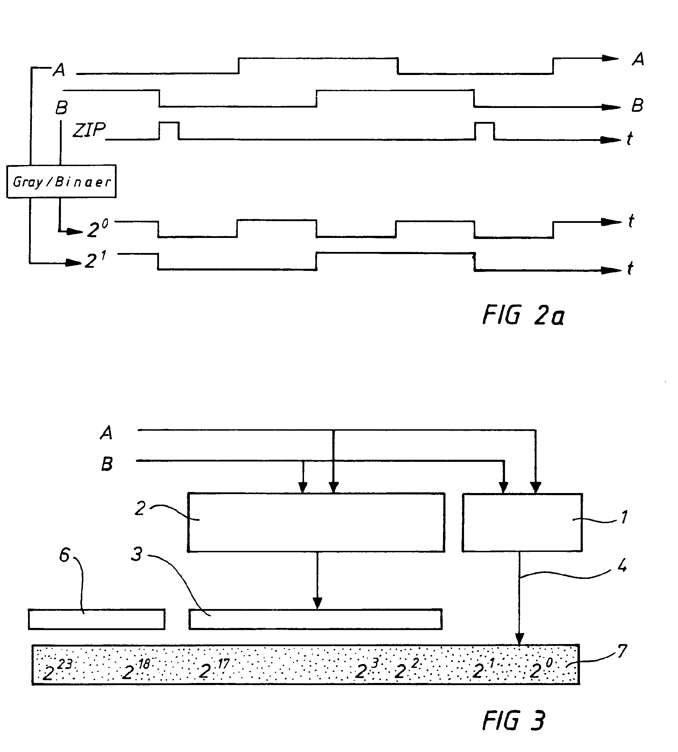

Die Figur 2a enthält eine mit der Figur 1a vergleichbare Impulsfolge nun aber mit dem neuen erfinderischen Konzept, wo ersichtlich ist, daß in Figur 2a die Weginformation 2° und 2¹ durch Gray-Binärcodewandlung direkt zur Verfügung steht. Im Unterschied zur Figur 1a werden nach Figur 2a die Stellen 2² bis 2¹⁷ durch Zählimpulse ZIP lediglich der Einfach-Auswertung im Hardwarezähler erzeugt. Aus Figur 2a ist demnach ersichtlich, daß die Eingangsfrequenz der Gebersignale A und B erheblich, nämlich um das Vierfache, gesteigert werden können um im Vergleich zu Figur 1a die Grenzfrequenz des dortigen Zählimpulses ZIP zu erreichen.

Nach Figur 2a entspricht dort die absolute Information 2°,2¹ in erhöhter Genauigkeit einer Vierfach-Auswertung, während bei gleicher Genauigkeit der Hardwarezähler, ausgehend von dem Zählimplus ZIP, mit einfacher Auswertung betrieben wird.

Bei bekannten Zählschaltungen wird demnach normalerweise ein Signal über einen Phasendiskriminator ausgewertet, wobei aus einer Periode vier Zählimpulse t₄ generiert werden können, wie dies in Figur 1 betreffend den Geber A dargestellt ist.

Das Ziel liegt nun darin, die Eingangsfrequenz von Kanal A und Kanal B zu erhöhen, und zwar beispielsweise um den Faktor vier insbesondere bei Beibehaltung der Zählfrequenz t₄ nach Figur 1, was einer Vierfach-Auswertung bei erhöhter Genauigkeit entspricht.

Bezüglich der Figur 1 bedeutet dies, daß beim Geber A über die Zeit t_{A} eine Signalfolge dargestellt ist und über den Geber B hier mit der Zeit t_{B} eine um 90° versetzte Signalfolge aufgezeigt ist, wobei aus diesen beiden Signalfolgen die vierfache Zählfrequenz namlich t₄ generiert wird. Aus Figur 1 ist auch ersichtlich, daß die Frequenz der Signale t_{A} t_{B} nicht beliebig erhöht werden kann, weil sonst die Zählfrequenz t₄ in der Grenzfrequenz überschritten werden würde.

In Figur 2 ist nun in Kurvenverläufen die Erfindung dargestellt wo ersichtlich ist, daß zunächst die Signalfolge von Kanal A und Kanal B in Perioden unterteilt ist. In der Periodeninformation selbst, hier ersichtlich aus Kanal A und Kanal B nach Figur 2, ist bereits eine Absolutinformation für die Winkelposition für den Weg oder dergleichen enthalten.

Durch einen einfachen Decoder 1 nach Figur 2 kann nun die Periodeninformation von Kanal A und Kanal B direkt, auch im Vergleich mit Figur 2a, in ein binäres Signal umgesetzt werden. Dieses binäre Signal ist in den beiden Kurven t₀ und t₁ in Figur 2 dargestellt.

In praktischer Ausführung handelt es sich bei einem derartigen Decoder 1 um einen Gray-Binärcodewandler bzw. um ein Exclusive-Norgatter, welches hier die Codeumsetzung verwirklicht.

Aus Figur 3 ist ersichtlich, daß dieser Decoder 1 sicherstellt, daß in Verbindung mit Figur 2 an einer bestimmten Stelle des Signalverlaufes die absolute Weginformation 0,1,2 oder 3 bezüglich der untersten 2bit enthalten ist.

Würde ein anderer Decoder verwendet werden, dann könnte man die ganze Kurvenform t₀ und t₁ nach Figur 2 um einen Takt, z. B. nach rechts oder nach links. verschieben und die absoluten Weginformationen 0,1,2,3 würden dann um einen Takt versetzt nach links oder rechts liegen.

Man kann also an jeder Stelle der Periode die Sequenz 0.....3 beginnen lassen; d. h. es gibt über die Periode gesehen vier verschiedene Decoderausgänge und vier verschiedene Signalverläufe, die jeweils um einen Takt versetzt zueinander sind.

Man kann damit einen genauen Nullpunkt für einen Decoder 1 und damit für ein Positionsmeßgerät festlegen in Abhängigkeit von dem Kurvenverlauf t_{A}, t_{B} der Periode nach Figur 2.

Aus Figur 3 ist ersichtlich, daß hier die Kanäle A und B auf den Decoder 1 geführt werden und gleichzeitig auf den Phasendiskriminator 2, wo nun nach Figur 2a nur eine Einfach-Auswertung ausgeführt wird. Trotz der nur einfachen Auswertung mit der Zählfrequenz t_{z} nach Figur 2, vergleichbar mit der Zählfrequenz t₁ in Figur 1, ergibt sich eine der sonst vierfachen Auswertung mit der Zählfrequenz t₄ nach Figur 1 erhöhte Genauigkeit, weil der Decoder 1 die Vierfach-Auswertung durch Decodierung übernimmt.

Aus Figur 3 ist weiterhin ersichtlich, daß der Phasendiskriminator 2 auf den Hardwarezähler 3 geschaltet ist, die bei erhöhter Eingangsfrequenz der Kanäle A und B bis zu einer vierfachen Zählfrequenz etwa entsprechend dem Zeitverlauf t₄ nach Figur 1 getrieben werden können, ohne daß dabei bei erhöhter Eingangsfrequenz am Phasendiskriminator die Grenzfrequenz der nachgeschalteten Hardwarezähler überschritten wird.

Aus Figur 3 ist weiterhin ersichtlich, daß der Decoder 1 mit seinem Eingang an die Kanäle A und B geschaltet ist, während der Ausgang 4 des Decoders die untersten 2 bits, nämlich die Bits 2° und 2¹ für das binäre Signal bereitstellt.

Es reicht hier nach Figur 2 und Figur 3 demnach aus, lediglich die Anzahl der Perioden zu erfassen und man braucht jetzt nicht mehr diese vierfache Zählfrequenz wie es früher notwendig war, sondern mit dem Decoder 1 braucht man nur noch die Periodenzahl zu erfassen und mit dem absoluten Decodersignal in Verbindung zu bringen um eine absolute Positionsaussage zu haben.

Demnach werden eine Vierfach-Auswertung, wo das Überschreiten der Grenzfrequenz zu befürchten ist und entsprechend aufwendige, d.h. schnelle Zähler vermieden, und stattdessen wird ein einfacher Decoder 1 verwendet, der eine absolute Positionsbestimmung gibt. Über den Phasendiskriminator 2 nach Figur 3 mit Einfachauswertung wird dann mit dem Hardwarezähler 3 die Periodenzahl bestimmt.

Im praktischen Beispiel geht man z. B. von einem konkreten Hardwarezähler 3 aus, der eine maximale Zählfrequenz von 1 MHz hat. In Verbindung mit dem Decoder 1, wo man das Zählwort zusammensetzt, um eine absolute Information zu erhalten, kann man jetzt die Zählfrequenz entsprechend der Zeiten t_{A} und t_{B} nach Figur 2 der Kanäle A und B um das Vierfache erhöhen und überschreitet trotzdem nicht die Zählfrequenz von z. B. 1 MHz des Hardwarezählers 3, weil bei sonst gleicher Genauigkeit nach Figur 2a nur mit einfacher Auswertung im Bereich des Zählimpulses ZIP mit der Zeit t gearbeitet wird.

Nach Figur 3 stellt demnach die Zählanordnung einen hochfrisierten Zähler dar. Es wird aus Figur 3 ersichtlich, daß der eigentliche Hardwarezähler 3 erst aber der Bitstelle 2² bis zur Bitstelle 2¹⁷ des binären Signals 7 zählen muß. Es handelt sich hierbei also um einen 16bit Zähler, der über den Decoder 1 und die vom Decoder 1 bewirkte Absolutbestimmung jetzt um zwei weitere Bit erweitert wurde, so daß man jetzt insgesamt zwei Bit mehr zählen kann.

Im Ausführungsbeispiel der Figur 3 ist noch zusätzlich dargestellt, daß die schon hochgetriebene Zählanordnung, die hier aus dem Phasendiskriminator 2 und dem Decoder 1 besteht, noch um einen weiteren Softwarezähler 6 ergänzt werden kann, was eine erweiterte Auswertung und Erweiterung der Meßgrenzen der gesamten Zählanordnung ergibt.

Der Softwarezähler 6 ist nach Figur 3 als 6bit-Zähler ausgebildet, der damit die Meßgrenzen noch um weitere sechs Bit erhöht.

In Verbindung mit den Erläuterungen wird deutlich, daß jeder beliebige Hardwarezähler mit einem Decoder 2 und seiner Zuordnung zum Hardwarezähler 3 um zwei Bit erweitert werden kann.

Wichtig ist es nur, daß der Decoder 1 zur Erfassung der Bitstufen 2° und 2¹ eingesetzt wird, weil gerade dadurch die Reduktion der Frequenz ZIP nach Figur 2a bzw. der Frequenz t_{z} nach Figur 2 um den Faktor vier erreicht wird.

Die üblicherweise von einem Zähler inkremental zu erfassenden Bit 2° und 2¹ werden demnach nach Figur 3 durch eine absolute Positionserfassung ersetzt. Demnach werden also die Positionen 2° und 2¹ selbst nicht mehr gezählt, sondern diese Positionen werden absolut erfaßt.

Von der Funktion her wird demnach (nach Figur 2) 0-1-2-3- gezählt und bei Überschreitung der Zahl 3 erfolgt dann ein Übertrag auf den Hardwarezähler 3 nach Figur 3. Es kann demnach die Frequenz auf den Kanälen A und B nach Figur 3 gesteigert werden, ohne daß befürchtet werden muß die Grenzfrequenz der Hardwarezähler 3 zu erreichen oder etwaiger im Phasendiskriminator 2 angeordneter Zähler.

In weiterer Darstellung der Funktion ist diese derart, daß nicht wie bisher eine Periode der beiden Geberkanäle A und B zu vier Zählimpulsen t₄ nach Figur 1 führt, sondern nur zu einem Zählimpuls ZIP nach Figur 2a. Die Zählfrequenz für die Hardwarezähler 3 ist also nur ein Viertel der bisherigen Zählfrequenz.

Ermöglicht wird dies dadurch, daß der Inkrementalgeber innerhalb einer Periode als ein Absolutwertgeber mit 2bit Auflösung anzusehen ist. Die absolute Weginformation ist hierbei nach Figur 2a durch die beiden Geberkanäle A und B im Graycode gegeben innerhalb einer Periode. Es werden hierbei wie bei einem Absolutgeber die Anzahl der Umdrehungen, hier die Anzahl der Perioden, gezählt, was durch die Einfach-Auswertung mit der Zählfrequenz t_{z} nach Figur 2 erreicht wird.

Insgesamt ergibt sich der Vorteil, daß mit der Decoderschaltung nach Figur 2 und Figur 3 die Eingangsfrequenz vervierfacht werden kann und im weiteren, ohne die Grenzfrequenz der Hardwarezähler zu überschreiten, die Zählfrequenz ZIP bis auf eine Vierfach-Auswertung, die eine große Genauigkeit beinhaltet, gesteigert werden kann.

### ZEICHNUNGS-LEGENDE

1 Decoder
2 Phasendiskriminator
3 Hardwarezähler
4 Ausgang
6 Softwarezähler
7 Binäres Signal

## Patentansprüche

1. Signalumwandlungsverfahren für Inkrementalgeber, wobei Gebersignale entsprechender Position oder Winkellage mit einer bestimmten Eingangsfrequenz über zwei Kanäle (A,B) einem Phasendiskriminator (2) zugeführt werden, welcher Zählimpulse generiert, die zur Erfassung der Weg- oder Winkelinformation einem Hardwarezähler (3) zugeführt werden, dadurch gekennzeichnet, dass die Signalfolge der Kanäle (A,B) in Perioden unterteilt zusätzlich einem Codewandler (1) zugeführt wird, der dem Hardwarezähler (3) bezüglich der Wertigkeit eines auszuwertenden binären Signals (7) vorgeordnet ist, und dass der Codewandler (1) die untersten zwei Bit betreffend die absolute Weg- oder Winkelinformation innerhalb einer Periode enthält.

2. Signalumwandlungsverfahren nach Anspruch 1, dadurch gekennzeichnet, dass über den Codewandler (1) in Abhängigkeit vom Kurvenverlauf der Periode der Gebersignale der genaue Nullpunkt eines Positionsmessgerätes festgelegt wird.

3. Schaltung zur Ausführung des Verfahrens nach Anspruch 1 oder 2, dadurch gekennzeichnet, dass die Signalfolge der zwei Kanäle (A,B) durch den Phasendiskriminator (2) in Perioden unterteilt ist, an dessen Ausgang ein Hardwarezähler (3) angeschlossen ist, der lediglich die Signalfolge des binären Signals (7) ab dem 2² bit zählt und dass der Codewandler (1) die bits 2⁰ und 2¹ als absolute Weg- oder Winkelinformation erfasst.

4. Schaltung nach Anspruch 3, dadurch gekennzeichnet, dass der Codewandler (1) als Exclusiv-Nor-Gatter geschaltet ist und die Periodeninformation der beiden Kanäle ( A, B) direkt in das binäre Signal (7) umsetzt.

5. Schaltung nach Anspruch 3, dadurch gekennzeichnet, dass der Codewandler (1) als Gray-Binärcodewandler ausgebildet ist.

## Claims

1. A signal conversion method for incremental transmitters, in which transmitter signals of corresponding position or angle situation are supplied with a particular input frequency via two channels (A, B) to a phase discriminator (2), which generates counting pulses, which are supplied to a hardware counter (3) to monitor the path- or angle information, characterised in that the signal sequence of the channels (A,B), divided into periods, is additionally supplied to a code converter (1), which is arranged in front of the hardware counter (3) with regard to the valence of a binary signal (7) to be evaluated, and that the code converter (1), relating to the lowest two bits, contains the absolute path- or angle information within a period.

2. A signal conversion method according to Claim 1, characterised in that via the code converter (1) as a function of the curve path of the period of the transmitter signals the exact zero point of a position measurement instrument is established.

3. A circuit to carry out the method according to Claim 1 or 2, characterised in that the signal sequence of the two channels (A,B) is divided by the phase discriminator (2) into periods, at the output of which a hardware counter (3) is connected, which merely counts the signal sequence of the binary signal (7) from the 2² bit and that the code converter (1) monitors the bits 2⁰ and 2¹ as absolute path- or angle information.

4. A circuit according to Claim 3, characterised in that the code converter (1) is connected as an exclusive Nor gate and converts the period information of the two channels (A, B) directly into the binary signal (7).

5. A circuit according to Claim 3, characterised in that the code converter (1) is constructed as a Gray/binary code converter.

## Revendications

1. Procédé de conversion de signaux pour transmetteur incrémentiel, selon lequel des signaux de transmetteur présentant une position ou une position angulaire correspondante sont transmis à une fréquence d'entrée définie, par l'intermédiaire de deux canaux (A, B), au discriminateur de phase (2) qui génère des impulsions de comptage transmises à un compteur de matériel (3) en vue de la détection de l'information de course ou d'angle, caractérisé en ce que la succession de signaux des canaux (A, B), divisée en périodes, est transmise en outre à un convertisseur de code (1) qui est placé en amont du compteur de matériel (3) en ce qui concerne la priorité d'un signal binaire (7) à analyser, et en ce que le convertisseur de code (1) contient, en ce qui concerne les deux bits inférieurs, l'information de course ou d'angle absolue à l'intérieur d'une période.

2. Procédé de conversion de signaux selon la revendication 1, caractérisé en ce que le point zéro exact d'un appareil de mesure de position est déterminé par l'intermédiaire du convertisseur de code (1) en fonction de l'allure de la courbe de la période des signaux de transmetteur.

3. Circuit pour exécuter le procédé selon la revendication 1 ou 2, caractérisé en ce que la succession de signaux des deux canaux (A, B) est divisée en périodes par le discriminateur de phase (2) à la sortie duquel est raccordé un compteur de matériel (3) qui ne compte que la succession de signaux du signal binaire (7) à partir du bit 2², et en ce que le convertisseur de code (1) détecte les bits 2⁰ et 2¹ comme information de course ou d'angle absolue.

4. Circuit selon la revendication 3, caractérisé en ce que le convertisseur de code (1) est monté sous la forme d'une porte NI exclusive et convertit l'information de période des deux canaux (A, B) directement en signal binaire (7).

5. Circuit selon la revendication 3, caractérisé en ce que le convertisseur (1) est conçu comme un convertisseur de code binaire Gray.
